(19) Europäisches Patentamt

European Patent Office

Office européen des brevets

(11) **EP 4 498 284 A1**

(12) **EUROPEAN PATENT APPLICATION**

(43) Date of publication:
 **29.01.2025 Bulletin 2025/05**

(21) Application number: **24154497.2**

(22) Date of filing: **29.01.2024**

(51) International Patent Classification (IPC):
 ***G06N 3/045*** (2023.01)   ***G06N 3/047*** (2023.01)
 ***G06N 3/084*** (2023.01)   ***G06N 3/044*** (2023.01)

(52) Cooperative Patent Classification (CPC):
 **G06N 3/084; G06N 3/044; G06N 3/045;
 G06N 3/047**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **24.07.2023 EP 23425036**

(71) Applicants:
 • **STMicroelectronics International N.V.
 1228 Plan-les-Ouates, Geneva (CH)**

• **STMicroelectronics S.r.l.
 20864 Agrate Brianza (MB) (IT)**

(72) Inventors:
 • **PAU, Danilo Pietro
 20099 SESTO SAN GIOVANNI (IT)**
 • **SINGH, Surinder Pal
 201301 NOIDA (IN)**
 • **AYMONE, Fabrizio Maria
 20145 MILANO (IT)**

(74) Representative: **Cabinet Beaumont
 4, Place Robert Schuman
 B.P. 1529
 38025 Grenoble Cedex 1 (FR)**

(54) **METHOD AND DEVICE FOR ON-DEVICE LEARNING BASED ON MULTIPLE INSTANCES OF INFERENCE WORKLOADS**

(57)   The present disclosure relates to a method of training a neural network (Net1) using a circuit comprising a memory (104) and a processing device (102), the method comprising: performing a first forward inference pass through the neural network based on input features to generate first activations, and generating an error based on a target value, and storing said error to the memory (104); and performing, for each layer of the neural network (Net1): a modulated forward inference pass; before, during or after the modulated forward inference pass, a second forward inference pass based on said input features to regenerate one or more first activations; and updating one or more weights in the neural network (Net1) based on the modulated activations and said one or more regenerated first activations.

Fig 1

Processed by Luminess, 75001 PARIS (FR)

EP 4 498 284 A1

## Description

Technical field

The present disclosure relates generally to the field of artificial intelligence, and in particular to a method and circuit for training a neural network.

Background art

Machine learning based on neural networks provides a powerful tool for many applications in which new solutions are to be developed for performing tasks, such as classification, regression and other inferences. Machine learning generally involves a learning phase, during which training data is used to learn the parameters of the neural network that result in a desired behavior at inference deployment. Once trained, an inference workload is then entered which involves using the neural network to process input data and provide desired outputs.

Deploying deep learning models on systems with limited resources, such as those prevalent in IoT (Internet of Things), automotive micro-controllers (MCUs) and sensor devices, allows to realize the advantages of decentralized, distributed AI (Artificial Intelligence) deployed as close as possible to the raw data being generated. The severely limited embedded memory and processing resources, available in such edge devices generally leads to the use of hand-crafted design approaches. The common development approach generally involves: training the model off-device in a supervised fashion using back-propagation and stochastic gradient descent techniques, tweaking the learning hyper-parameters, and then reducing the model size through methods such as pruning, compression and quantization. Finally, the solution is deployed on the small or tiny devices to perform low-power inference. The learning process, therefore, occurs in advance of the model being deployed on the device. This can rapidly become a problem as AI models succumb to problems like accuracy performance degradation as time passes, known as concept drift, since the last training cycle. Another reason for activating the learning process on-device is to be able to fine-tune a previously learned model to personalize it for specific patterns of usage.

Hence, to keep tiny devices delivering highly accurate services through time, it would be desirable that they are capable of adapting their knowledge to the incoming data properties collected in streaming mode through the sensors, by continuous learning according to an on-device learning solution.

A drawback of back-propagation techniques is that they lead to a memory bottleneck due to the storage of intermediate activations.

Recently "Forward-only algorithms" have been proposed as biologically plausible alternatives to backpropagation. However, generally, the gain in terms of reducing memory and processing resources offered by existing forward-only algorithms is limited, and there is a need in the art for an improved method and device for machine learning allowing significant reductions in memory requirements and associated power consumption, particularly in the case of on-device learning.

Summary of Invention

According to one aspect, there is provided a method of training a neural network using a circuit comprising a memory and a processing device, the method comprising: performing a first forward inference pass through the neural network based on input features to generate first activations, and generating an error based on a target value, and storing said error to the memory; and performing, for each layer of the neural network: a modulated forward inference pass based on said error to generate one or more modulated activations, and storing the one or more modulated activations to the memory; before, during or after the modulated forward inference pass, a second forward inference pass based on said input features to regenerate one or more of said first activations, and storing said one or more regenerated first activations to the memory; and updating one or more weights in the neural network based on the modulated activations and said one or more regenerated first activations.

According to one embodiment, storing said one or more regenerated first activations to the memory comprises at least partially overwriting one or more previously-generated activations.

According to one embodiment, the second forward inference pass is performed at least partially in parallel with said modulated forward inference pass.

According to one embodiment, the modulated forward inference pass is performed using a first processing circuit of the processing device, and the second forward inference pass is performed using a second processing circuit of the processing device at least partially in parallel with said modulated forward inference pass.

According to one embodiment, the modulated forward inference pass is performed using a first processing circuit of the processing device, and the second forward inference pass is also performed using said first processing circuit before or after said modulated forward inference pass.

According to one embodiment, updating the one or more weights in the neural network based on the modulated activations and on said one or more regenerated first activations comprises updating a weight of a first layer of the neural network prior to the generation of said regenerated activations and/or modulated activations for a last layer of the neural network.

According to one embodiment, the weights are updated for a first layer of said network based on the regenerated activations generated by the second forward interface pass and on the modulated activations generated during the modulated interference pass, prior to regenerating the activations and/or generating the modulated activations for a second layer of the said network, the second layer being the next layer after the first layer.

According to a further aspect, there is provided a circuit for training a neural network, the circuit comprising a memory and a processing device, the processing device being configured to: perform a first forward inference pass through the neural network based on input features to generate first activations; generate an error based on a target value, and store said error to the memory; and perform, for each layer of the neural network: a modulated forward inference pass based on said error to generate one or more modulated activations, and store the one or more modulated activations to the memory; before, during or after the modulated forward inference pass, a second forward inference pass based on said input features to regenerate one or more of said first activations, and store said one or more regenerated first activations to the memory; and update one or more weights in the neural network based on the modulated activations and on said one or more regenerated first activations.

According to one embodiment, the processing device is configured to store said one or more regenerated first activations to the memory comprises at least partially overwriting one or more previously-generated activations.

According to one embodiment, the processing device is configured to perform said second forward inference pass at least partially in parallel with said modulated forward inference pass.

According to one embodiment, the processing device is configured to perform said modulated forward inference pass using a first processing circuit of the processing device, and to perform the second forward inference pass using a second processing circuit of the processing device at least partially in parallel with said modulated forward inference pass.

According to one embodiment, the processing device is configured to perform said modulated forward inference pass using a first processing circuit of the processing device, and to perform the second forward inference pass using said first processing circuit before or after said modulated forward inference pass.

According to one embodiment, the processing device is configured to update at least one weight of a first layer of the neural network based on the modulated activations and on said one or more regenerated first activations prior to the generation of said regenerated activations and/or modulated activations for a last layer of the neural network.

According to one embodiment, the processing device is configured to update the weights for a first layer of said network based on the regenerated activations generated by the second forward interface pass and on the modulated activations generated during the modulated interference pass, prior to regenerating the activations and/or generating the modulated activations for a second layer of the said network, the second layer being the next layer after the first layer.

According to one embodiment, the circuit further comprises:

- one or more sensors configured to sense said input features; and/or
- one or more actuators configured to perform an action as a function of the one or more of said activations or regenerated activations.

Brief description of drawings

The foregoing features and advantages, as well as others, will be described in detail in the following description of specific embodiments given by way of illustration and not limitation with reference to the accompanying drawings, in which:

Figure 1 schematically illustrates an electronic device with on-device learning according to an example embodiment of the present disclosure;

Figure 2 schematically illustrates a neural network according to an example embodiment of the present disclosure;

Figure 3 schematically illustrates an example of operations of a learning algorithm based on backpropagation;

Figure 4 schematically illustrates an example of operations of a learning algorithm based on forward-only propagation;

Figure 5 is a flow diagram illustrating the operations of the learning algorithm of Figure 4 in more detail; and

Figure 6 is a flow diagram illustrating operations of a learning algorithm based on memory efficient forward-only propagation according to an example embodiment of the present disclosure.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

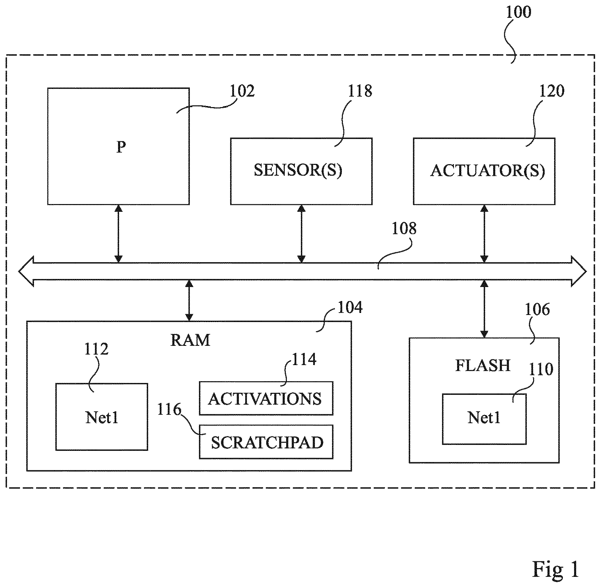

Figure 1 schematically illustrates an electronic device 100 with on-device learning according to an example embodiment of the present disclosure. The device 100 is for example an IoT edge device, capable of sensing, processing, storing information and actuation of any outcome of the processing.

The electronic device 100 for example comprises a processing device (P) 102 having one or more processors under control of instructions stored in a memory 104 (RAM) of the device. The memory 104 is for example a volatile memory, such as a random-access memory (RAM). The one or more processors of the processing device 102 are for example CPUs (Central Processing Units), MCUs (Micro-controllers), NPUs (Neural Processing Units), and/or GPUs (Graphics Processing Units).

The electronic device 100 also for example comprises a non-volatile memory 106 (FLASH), which is for example a Flash memory. The processing device 102 is for example coupled to the memories 104 and 106 via a bus 108. The non-volatile memory 106 for example stores, in a region 110, the weights of an artificial neural network (ANN) Net1. For example, the set of parameters of the neural network Net1 is fully defined in the region 110 of the memory 106, including the definition of the topology of the ANN, i.e. the number of neurons in the input and output layers and in the hidden layers, the number of hidden layers, the activation functions applied by the neuron circuits, etc. Furthermore, the data defining the network Net1 also for example includes parameters of the ANN learnt during training, such as its weights.

During inference, the ANN Net1 is for example applied using the definition of the network stored in the non-volatile memory 106. During learning, the ANN Net1 is for example loaded to a region 112 of the volatile memory 112, where its weights can be modified at run time by the learning algorithm. Furthermore, during inference and/or learning, the memory 104 for example stores activations 114 (ACTIVATIONS) of the neuron network, and also for examples stores the contents of a scratch pad 116 (SCRATCHPAD) containing the results of intermediate computations. The updated version of the ANN Net1 is for example stored back to the non-volatile memory 106 at the end of a learning phase. In this way, the ANN Net1 is trained and/or used for inference within the computing environment of the edge device 100.

The electronic device 100 also for example comprises one or more sensors (SENSOR(S)) 118 coupled to the bus 108, and/or one or more actuators (ACTUATOR (S)) 120, coupled to the bus 108. In some embodiments, the sensors 118 provide input features, such as data samples, and the electronic device 100 is configured to perform inference on the input features in order to generate one or more predictions, labels or measures. The electronic device 100 is also for example configured to control the one or more actuators 120 as a function of a result of the inference operation. In some embodiments, one or more of the sensors 118 may be configured to generate data forming a ground truth used during a learning operation, and in this way the device 102 is for example capable of on-device continuous learning.

The one or more sensors 118 for example comprise one or more image sensors, depth sensors, heat sensors, microphones, or any other type of sensor. For example, the one or more sensors 118 comprise an image sensor having a linear or 2-dimensional array of pixels. The image sensor is for example a visible light image sensor, an infrared image sensor, an ultrasound image senor, or an image depth sensor, such as a LIDAR (LIght Detection And Ranging) image sensor. In this case, input data samples captured by the sensors 118 and provided to the electronic device 100 are images, and the electronic device 100 is configured to perform image processing on the images in order to determine one or more actions to be applied via the actuators 120. As an example, the electronic device 100 is configured to attempt to recognize the identity of a person based on an image of the person captured by an image sensor of the device 100, and to unlock a door, such as a home entrance door, if the identity is confirmed, or otherwise to keep the entrance door locked.

The one or more actuators 120 for example comprise an electric motor control loop, a steering or breaking system for a vehicle, or an electronic actuator, which is for example configured to control the operation of one or more circuits, such as waking up a circuit from sleep mode, causing a circuit to enter into a sleep mode, causing a circuit to generate a text output, to perform a data encoding or decoding operation, etc. For example, in one embodiment the actuators 120 comprise a control circuit causing the generation and transmission of a data packet by the electronic device 100 comprising sensor data from the one or more sensors 118, and/or data generated based on the sensor data.

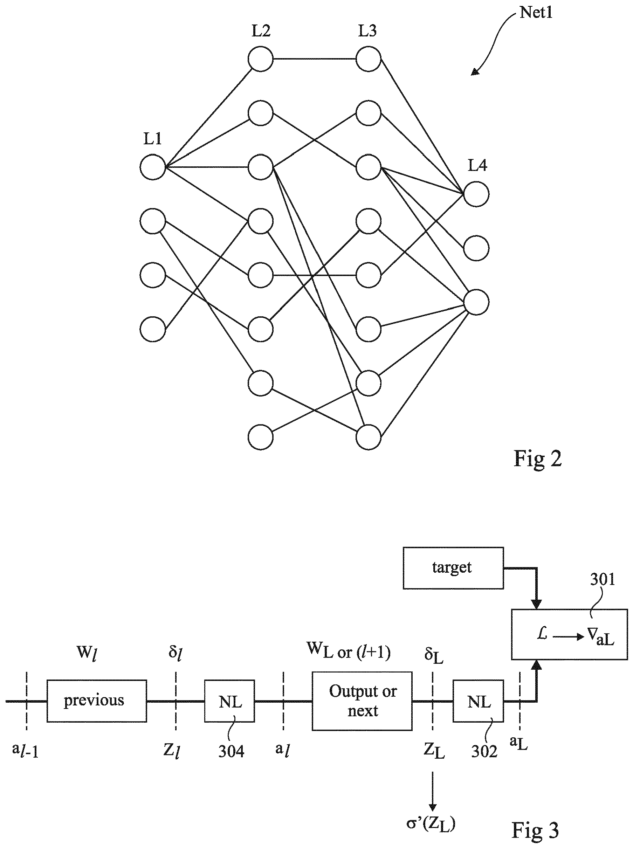

Figure 2 schematically illustrates the neural network Net1 according to an example embodiment of the present disclosure. In the example of Figure 2, Net1 comprises four layers of neurons L1 to L4, the layer L1 for example being an input layer, the layer L4 for example being an output layer, and the layers L2 and L3 being hidden layers. Each layer comprises neurons, represented by circles in Figure 2, there being four neurons in the input layer L1, eight neurons in each of the hidden layers L2, L3, and three neurons in the output layer L4, in the particular example of Figure 2. Of course, in alternative embodiments, the network Net1 could comprise a different number of neurons in each layer. Each neuron applies an activation function when it is activated by an input signal, the activation functions for example being the same for all of the neurons of the network, or varying among the neurons, and for example being different between the neurons of different layers. Furthermore, each neuron in each of the layers L2 to L4 is connected to the output of one or more neurons from the previous layer L-1 via a synapse, represented in Figure 2 by lines between the neurons. Each synapse for example multiples, by a weight, the signal between the output of one neuron and the input of the next. In the example of Figure 2, there are connections between the inputs of each neurons in each layer L2, L3, L4 and the outputs of certain, but not all of the neurons in the previous layer L-1. In alternative embodiments, the network Net1 could be a fully-connected network in which the input of each neuron in each layer L2, L3, L4 is connected to the output of each neuron in the previous layer L-1.

Figure 3 schematically illustrates an example of operations of a learning algorithm based on backpropagation. This algorithm can for example be applied to the neural network Net1 of Figure 2. The terms "previous" and "output or next" in Figure 3 refer to a layer, for example an input, hidden or output layer of a neural network topology.

The backpropagation algorithm is for example as follows:

[Math 1]

---
**Algorithm 1** Backpropagation

---
**Forward Pass**
**for** $l = 1, ..., L$ **do**
$$a_l = \sigma_l(W_l a_{l-1} + b_l)$$
**end for**
**Backward pass layer L**
$$\delta_L = \nabla_{a_L} L(a_L, target) \odot \sigma'(z_L)$$
$$W_L = W_L - \delta_L a_{previous}^T$$
**Backward pass previous layers**
**for** $l = previous, ...$ **do**
$$\delta_l = W_{l+1}^T \delta_{l+1} \odot \sigma'(z_l)$$
**Weight update**
$$W_l = W_l - \delta_l a_{l-1}^T$$
**end for**

---

The algorithm comprises, for each learning operation involving a ground truth and resulting in a weight update: i) a forward pass; ii) a backward pass for the last layer L of the network; and iii) backward passes for each previous layer of the network.

During the forward pass, activations $a_l$ are calculated in each layer l and stored, starting with the input layer l=1, and ending with the output layer l=L, based on an activation function $\sigma_l$ of the layer l, applied to the activations $a_{l-1}$ generated in the previous layer 1-1, and based on the weight matrix $W_l$ of the synapses between layer l-1 and layer l, and based on a bias $b_l$ associated with layer l.

During the backward pass for a final layer L, a loss $\mathcal{L}$ is calculated, using a loss function $\mathcal{L}$ (**$a_L$, target**), with respect to the ground truth (**target**) and the final output $a_L$ of the network. As represented by an operation 301 in Figure 3, a gradient $\nabla_{aL}$ of the loss in then computed, and the derivative $\delta_L$ of the loss function for the output layer Lin Figure 3, is then computed as the Hadamard product with respect to the derivative $\sigma'(z_L)$ of the output activations $z_L$, before a NL (Non-Linearity) block 302. The weight matrix $W_L$ of the output layer, or $W_{l+1}$ of the next layer, labelled "Output or next" in Figure 3 (where "Output" refers to the output layer, or last layer L of the network, and "next" refers to the next layer with respect to the layer l, in other words the layer l+1) is then updated by subtracting from the weights $W_L$, the derivative $\delta_L$ of the loss function multiplied by the input activations of the previous layer $a_{previous}^T$ determined and stored in memory during the forward pass.

During the backward passes for each previous layer of the network, in reverse pipeline order, the derivative $\delta_l$ of the loss function of the previous layer (NL 304 in Figure 3) is computed as the product of the weights $W_{l+1}^T$ of the next layer with the derivative $\delta_{l+1}$ calculated in the previous step and the Hadamard product of the derivative $\sigma'(z_l)$ of the nonlinearity with respect to the output activations $z_l$ of the previous layer. The weight matrix $W_l$ of the previous layer l (operation labelled "previous" in Figure 3) is then updated by subtracting from the weights $W_l$ the derivative $\delta_l$ of the loss function multiplied by the input activations of the previous layer $a_{l-1}^T$ determined and stored during the forward pass.

A drawback of the backpropagation algorithm of Figure 3 is that the activations $a_{previous}^T$ and $a_{l-1}^T$ of each layer should be stored in memory during the forward pass and kept until the backward pass has been completed. This leads to a relatively high memory burden.

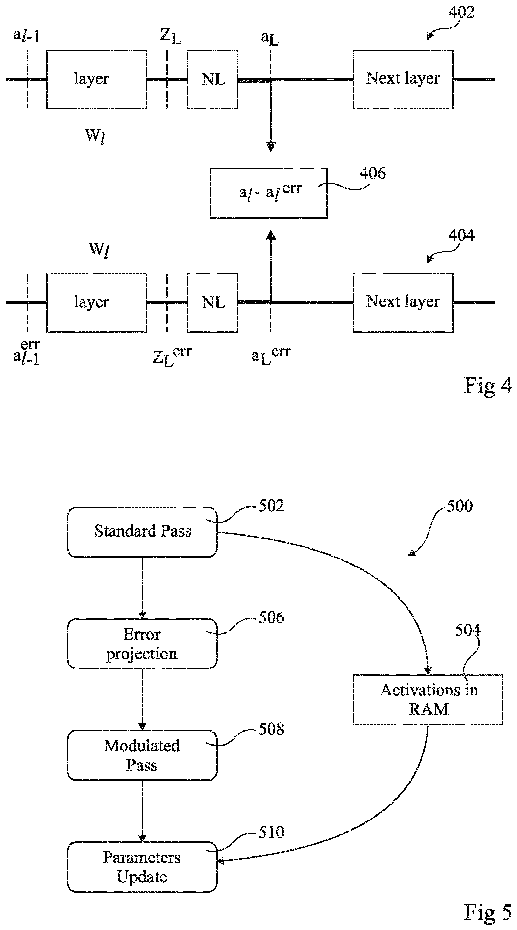

Figure 4 schematically illustrates an example of operations of a learning algorithm based on forward-only propagation. This algorithm has been named PEPITA (Present the Error to Perturb the Input To modulate Activity), and is described in more detail in the publication G. Dellaferrera and G. Kreiman, "Error-driven input modulation: Solving the credit assignment problem without a backward pass," ArXiv, vol. abs/2201.11665, 2022, the content of which is hereby incorporated by reference to the extent permitted by the law. The algorithm is detailed below.

[Math 2]

---

**Algorithm 3** PEPITA

**Given:** Features($x$) and label($target$)

   **Standard Pass**

   $a_0 = x$

   **for** $\ell = 1, ..., L$ **do**

      $a_\ell = \sigma_\ell(W_\ell a_{\ell-1})$

   **end for**

   $e = a_L - target$

   **Modulated pass**

   $a_0^{err} = x + Fe$

   **for** $\ell = 1, ..., L$ **do**

      $a_\ell^{err} = \sigma_\ell(W_\ell a_{\ell-1}^{err})$

      **Weight update**

      $W_\ell = W_\ell - (a_\ell - a_\ell^{err}) \cdot (a_{\ell-1}^{err})^T$

   **end for**

---

The PEPITA algorithm involves two passes, a standard forward inference pass and a modulated forward inference pass.

During the standard pass, labelled 402 in Figure 4, a forward inference is generated based on input data x to a first layer $a_0$, and activations are propagated forward through each layer of the network to the output layer L, the activations of each layer l being based on an activation function $\sigma_l$ of the layer l, applied to the activations $a_{l-1}$ generated in the previous layer 1-1, and based on the weight matrix $W_l$ of the synapses between layer l-1 and layer l. In some cases, like in the back propagation algorithm, it would be possible to calculate the activations $a_l$ also based on a bias $b_l$ associated with layer l.

After the forward inference has been completed, an error projection operation is performed in which the error e at the output is calculated based on the difference between the ground truth (**target**) and the final output $a_L$ of the network.

During the modulated forward inference pass, labelled 404 in Figure 4, modulated activations are generated, corresponding to activations that consider the error e. In particular, the product of the error e and a matrix F is added to the input data **x** in order to generate modulated activations $a_0^{err}$ from the input layer. The matrix F is for example a matrix having a zero mean and a relatively small variance. For example, the matrix F is randomly generated with a Gaussian or uniform distribution with zero mean and variance equal to, for example, 0.05 sqrt(2/FANIN), where FANIN is the input tensor shape to the neural network. For example, if the input tensor is a 28*28 image, FANIN is equal to 784. Then, for each subsequent layer l, with l=1..L, the modulated activations $a_l^{err}$ are calculated as the activation function $\sigma_l$ of the layer l, applied to the product of the weight matrix $W_l$ of the synapses between layer l-1 and the layer l, and the modulated activations $a_{l-1}^{err}$ generated for the previous layer l-1.

As represented by a block 406 in Figure 4, after the modulated pass has been completed, the weights are updated based on a difference between the activations $a_l$ of the layer l and the modulated activations $a_l^{err}$ of the layer l. For example, the new weight matrix $W_l$ is calculated by subtracting from the existing matrix the product of the difference ($a_l$ - $a_l^{err}$) and the transposed modulated activations $\left(a_{l-1}^{err}\right)^T$ from the previous layer, wherein the activations $a_l$ and $a_{l-1}^{err}$ have been stored in memory.

Figure 5 is a flow diagram illustrating the operations of a learning algorithm 500 corresponding to that of Figure 4 shown in more detail. As explained above, the PEPITA algorithm involves a standard pass 502 (Standard Pass), followed by an operation 504 (Activations in RAM) of storing the activations in such a memory. After the standard pass 503, an operation of error projection 506 (Error projection) is also performed, followed by a modulated forward inference pass 508 (Modulated Pass). Finally, the parameters are updated in an operation 510 (Parameters Update), based on the modulated activations of the modulated pass, and on the activations generated during the standard pass.

A drawback of the PEPITA algorithm of Figures 4 and 5 is that the activations $a_l$ of each layer should be stored in memory during the standard forward pass and kept until the weights have been updated for each layer. This leads to a relatively high memory burden, which is as high as the one required by the back propagation method described above.

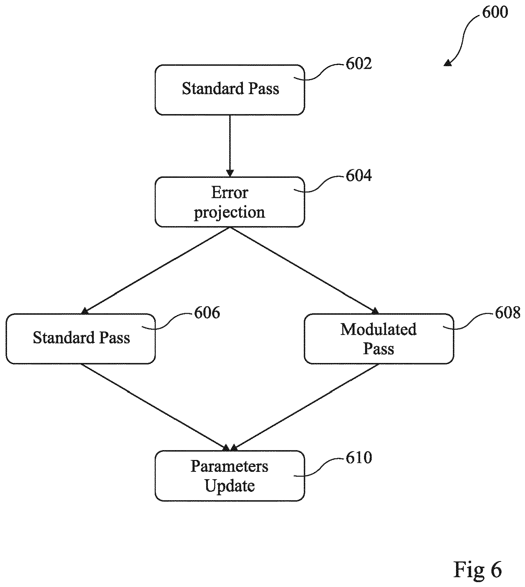

Figure 6 is a flow diagram illustrating operations of a learning algorithm 600 based on memory efficient forward-only propagation according to an example embodiment of the present disclosure.

The learning algorithm 600 of Figure 6 is for example implemented by the electronic device 100 of Figure 1. For example, the processing device 102 is configured to execute instructions stored in the memory 104 causing the operations of the learning algorithm to be implemented on the neural network Net1, such that the weights of this neural network are updated. Initially, the parameters of the neural network Net1 are for example loaded to the region 112 of the volatile memory 104 from the region 110 of the non-volatile memory 106. Following one or more learning phases, the updated neural network Net1 is for example stored back to the non-volatile memory 106. The updated neural network Net1 may then be used for inference, for example by receiving input data from the one or more sensors 118, generating one or more predictions, and controlling the one or more actuators 120 as a function of these predictions.

The algorithm 600 involves three forward passes through the neural network, a first standard forward inference pass 602 (Standard Pass), followed by a step of error projection 604 (Error projection), a second standard forward inference pass 606 (Standard pass) to recompute the activations without storing all of them as in PEPITA, and a modulated forward inference pass 608 (Modulated Pass) performed at least partially in parallel with the second standard pass 606. Finally, parameters are updated in an operation 610 (Parameters Update) based on the activations and modulated activations of the standard and modulated passes 606, 608.

The standard passes 602 and 606 are indicated as "standard" simply because they are not modulated passes that propagate the error. All of the passes 602, 606 are forward inferences.

For example, the algorithm 600 is based on the following calculation:

[Math 3]

---

**Algorithm 2** MEMPEPITA

---

**Given:** Features($x$) and label($target$)

    **Standard Pass**

    $a_0 = x$

    **for** $\ell = 1, ..., L$ **do**

        $a_\ell = \sigma_\ell(W_\ell a_{\ell-1})$

    **end for**

    $e = a_L - target$

    **Error projection**

    $a_0^{err} = x + Fe$

    **for** $\ell = 1, ..., L$ **do**

        **Standard pass**

        $a_\ell = \sigma_\ell(W_\ell a_{\ell-1})$

        **Modulated pass**

        $a_\ell^{err} = \sigma_\ell(W_\ell a_{\ell-1}^{err})$

        **Weight update**

        $W_\ell = W_\ell - (a_\ell - a_\ell^{err}) \cdot (a_{\ell-1}^{err})^T$

    **end for**

---

During the first standard pass 602, a forward inference is generated based on input data **x** to a first layer **$a_0$** of the neural network Net1, and then activations are propagated through each layer of the network to the output layer L, the activations of each layer I being based on an activation function $\sigma_l$ of the layer I, applied to the activations **$a_{l-1}$** generated in the previous layer 1-1, and based on the weight matrix **$W_l$** of the synapses between layer I-1 and layer I. For example, the activations **$a_l$** of each layer I are generated based on the following equation:

[Math 4]

$$a_l = \sigma_l(W_l a_{l-1})$$

where $\sigma_l$ is the activation function of the layer I.

After the forward inference has been completed, the error projection operation 604 is performed in which the error e at the output is calculated based on the difference between the ground truth (**target**) and the final output **$a_L$** of the network. For example, the error e is generated based on the following equation:

[Math 5]

$$e = a_L - target$$

In some embodiments, after the error e has been calculated, some or all of the activations generated during the first forward pass are deleted from the memory 104, and/or they are allowed to be overwritten.

The second standard inference pass 606 is for example executed in the same manner as the first standard inference pass 602. The activations generated during the second standard inference pass are for example stored in memory and used for calculating the updates to be made to the weights.

During the modulated forward inference pass 608, modulated activations are generated, corresponding to activations that consider the error e. In particular, the product of the error e and the matrix F is added to the input data x in order to generate modulated activations $a_0^{err}$ from the input layer. Then, for each subsequent layer I, with I=1..L, the

modulated activations $a_l^{err}$ are calculated as the activation function $\sigma_l$ of the layer l, applied to the product of the weight matrix $\boldsymbol{W_l}$ of the synapses between layer l-1 and the layer l, and the modulated activations $a_{l-1}^{err}$ generated for the previous layer l-1. For example, the activations $\boldsymbol{a_l}$ of each layer l are generated based on the following equation:

[Math 6]

$$a_l^{err} = \sigma_l(W_l a_{l-1}^{err})$$

In some embodiments, the processing device 102 comprises first and second processing units or circuits configured to operate in parallel, the first processing unit for example being configured to regenerate the activations associated with the second forward interference pass, at the same time as the second processing unit is configured to generate the modulated activations. Alternatively, the regeneration of the activations and the generation of the modulated activations is performed by a same processing unit or circuit in an interleaved fashion.

In an operation 610, the weights of each layer l of the neural network Net1 are updated based on a difference between the activations $\boldsymbol{a_l}$ of the layer l and the modulated activations $a_l^{err}$ of the layer 1. For example, the new weight matrix $\boldsymbol{W_l}$ is calculated by subtracting from the existing matrix the product of the difference ( $a_l - a_l^{err}$ ) and the transposed modulated activations $(a_{l-1}^{err})^T$ from the previous layer, wherein the activations $\boldsymbol{a_t}$ and $a_{l-1}^{err}$ have been stored in memory. For example, the weights $\boldsymbol{W_l}$ of each layer l are generated based on the following equation:

[Math 7]

$$W_l = W_l - (a_l - a_l^{err}) \cdot (a_l^{err})^T$$

In some embodiments, the operation of updating the weights is performed at least partially in parallel with the second forward pass 606 and/or at least partially in parallel with the modulated pass 608. For example, performing these operations at least partially in parallel implies updating the one or more weights $\boldsymbol{W_l}$ involves updating the weights of at least one layer of the neural network prior to the generation of the activations and/or modulated activations for the last layer L of the neural network Net1.

Furthermore, in some embodiments, for each layer l, the operations of the second forward interference pass, the modulated interference pass, and the updating of the weights, are completed for the current layer l prior to performing the corresponding operations on the next layer l+1 of the network. For example, the processing device 102 is configured to update the weights $\boldsymbol{W_l}$ for each layer of the network based on the regenerated activations generated by the second forward interface pass 606 and on the modulated activations generated during the modulated interference pass 608, prior to regenerating the activations and/or generating the modulated activations for the next layer l+1 of the network. In this way, the activations and/or modulated activations can for example be deleted, or be allowed to be overwritten, in the memory 104 once they have been processed in the next layer of the network.

An advantage of the embodiments described herein is that, by performing first and second forward passes through the neural network, the activations generated during the first pass can be used only for generating the error, and do not need to be stored until the step of updating the weights, which can be performed based on the activations generated during the second forward pass.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

**Claims**

1.    A method of training a neural network (Net1) using a circuit comprising a memory (104) and a processing device (102), the method comprising:

- performing a first forward inference pass (602) through the neural network based on input features (x) to generate first activations ($a_l$), and generating an error (e) based on a target value (**target**), and storing said error to the memory (104); and
- performing, for each layer (l) of the neural network (Net1):

a modulated forward inference pass (608) based on said error to generate one or more modulated activations ($a_l^{err}$), and storing the one or more modulated activations to the memory (104); before, during or after the modulated forward inference pass (608), a second forward inference pass (606) based on said input features (**x**) to regenerate one or more of said first activations ($a_l$), and storing said one or more regenerated first activations to the memory (104); and updating one or more weights ($W_l$) in the neural network (Net1) based on the modulated activations and said one or more regenerated first activations.

2. The method of claim 1, wherein storing said one or more regenerated first activations to the memory (104) comprises at least partially overwriting one or more previously-generated activations.

3. The method of claim 1 or 2, wherein said second forward inference pass (606) is performed at least partially in parallel with said modulated forward inference pass (608).

4. The method of claim 1 or 2, wherein said modulated forward inference pass (608) is performed using a first processing circuit of the processing device (102), and the second forward inference pass (606) is performed using a second processing circuit of the processing device (102) at least partially in parallel with said modulated forward inference pass (608).

5. The method of any of claims 1 to 4, wherein said modulated forward inference pass (608) is performed using a first processing circuit of the processing device (102), and the second forward inference pass (606) is also performed using said first processing circuit before or after said modulated forward inference pass (608).

6. The method of any of claims 1 to 5, or wherein updating the one or more weights ($W_l$) in the neural network (Net1) based on the modulated activations and on said one or more regenerated first activations comprises updating a weight of a first layer of the neural network (Net1) prior to the generation of said regenerated activations and/or modulated activations for a last layer (L) of the neural network (Net1).

7. The method of any of claims 1 to 6, wherein the weights ($W_l$) are updated for a first layer of said network based on the regenerated activations generated by the second forward interface pass and on the modulated activations generated during the modulated interference pass (608), prior to regenerating the activations and/or generating the modulated activations for a second layer of the said network, the second layer being the next layer after the first layer.

8. A circuit for training a neural network (Net1), the circuit comprising a memory (104) and a processing device (102), the processing device (102) being configured to:

- perform a first forward inference pass (602) through the neural network (Net1) based on input features (x) to generate first activations ($a_l$);
- generate an error (e) based on a target value (**target**), and store said error to the memory (104); and
- perform, for each layer (l) of the neural network (Net1):

a modulated forward inference pass (608) based on said error (e) to generate one or more modulated activations ($a_l^{err}$), and store the one or more modulated activations to the memory (104); before, during or after the modulated forward inference pass (608), a second forward inference pass (606) based on said input features (x) to regenerate one or more of said first activations ($a_l$), and store said one or more regenerated first activations to the memory (104); and update one or more weights ($W_l$) in the neural network (Net1) based on the modulated activations and on said one or more regenerated first activations.

9. The circuit of claim 7, wherein the processing device (102) is configured to store said one or more regenerated first activations to the memory (102) comprises at least partially overwriting one or more previously-generated activations.

10. The circuit of claim 7 or 8, wherein the processing device (102) is configured to perform said second forward inference pass (606) at least partially in parallel with said modulated forward inference pass (608).

11. The circuit of claim 7 or 8, wherein the processing device (102) is configured to perform said modulated forward inference pass (608) using a first processing circuit of the processing device (102), and to perform the second forward inference pass (606) using a second processing circuit of the processing device (102) at least partially in parallel with said modulated forward inference pass (608).

12. The circuit of any of claims 7 to 10, wherein the processing device (102) is configured to perform said modulated forward inference pass (608) using a first processing circuit of the processing device (102), and to perform the second forward inference pass (606) using said first processing circuit before or after said modulated forward inference pass.

13. The circuit of any of claims 7 to 12, wherein the processing device (102) is configured to update at least one weight of a first layer of the neural network (Net1) based on the modulated activations and on said one or more regenerated first activations prior to the generation of said regenerated activations and/or modulated activations for a last layer (L) of the neural network (Net1).

14. The circuit of any of claims 7 to 13, wherein the processing device (102) is configured to update the weights $(W_l)$ for a first layer of said network based on the regenerated activations generated by the second forward interface pass and on the modulated activations generated during the modulated interference pass (608), prior to regenerating the activations and/or generating the modulated activations for a second layer of the said network, the second layer being the next layer after the first layer.

15. The circuit of any of claims 7 to 14, further comprising:

   - one or more sensors (118) configured to sense said input features (x); and/or
   - one or more actuators (120) configured to perform an action as a function of the one or more of said activations or regenerated activations.

Fig 1

Fig 2

$\sigma'(Z_L)$

Fig 3

Fig 4

Fig 5

600

Standard Pass —602

Error
projection —604

Standard Pass —606    Modulated
Pass —608

Parameters
Update —610

Fig 6

Europäisches
Patentamt

European
Patent Office

Office européen
des brevets

# EUROPEAN SEARCH REPORT

**Application Number**

EP 24 15 4497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WAHEEB WADDAH ET AL: "Ridge Polynomial Neural Network with Error Feedback for Time Series Forecasting", PLOS ONE, vol. 11, no. 12, 13 December 2016 (2016-12-13), page e0167248, XP093179373, US ISSN: 1932-6203, DOI: 10.1371/journal.pone.0167248 * page 6 - page 11; figure 3 * | 1-15 | INV. G06N3/045 G06N3/047 G06N3/084 G06N3/044 |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 27 June 2024 | Falco, Gabriele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. DELLAFERRERA** ; **G. KREIMAN**. Error-driven input modulation: Solving the credit assignment problem without a backward pass. *ArXiv, vol. abs/2201.11665*, 2022